# EUROPEAN PATENT SPECIFICATION

(11) **EP 3 972 403 B1**
(45) Date of publication and mention of the grant of the patent: **20.11.2024**
(21) Application number: 19929358.0
(22) Date of filing: 22.05.2019
(51) Int. Cl.: A01B 7/00, A01B 15/16, A01B 21/08

(54) **AGRICULTURAL DISC BLADE WITH STEP PLANE NOTCH EDGE**
LANDWIRTSCHAFTLICHES SCHEIBENMESSER MIT KERBENKANTE AUF STUFENEBENE
LAME DE DISQUE AGRICOLE DOTÉE D'UN BORD D'ENCOCHE À PLAN ÉTAGÉ

(43) Date of publication of application: 30.03.2022
(73) Proprietor: Osmundson Mfg.Co., Perry, IA 50220 (US)
(72) Inventor: BRUCE, Douglas, G., West Des Maines, IA 50266 (US)
(74) Representative: Dentons UK and Middle East LLP
(86) International application number: PCT/US2019/033533
(87) International publication number: WO 2020/236172

(56) References cited:
- CN-A- 109 451 885
- US-A- 2 749 694
- US-A- 2 749 694
- US-A- 4 246 971
- US-A- 4 420 048
- US-A1- 2008 264 659
- US-A1- 2012 103 642
- US-A1- 2012 103 642
- US-A1- 2015 289 433
- US-A1- 2015 289 433
- US-A1- 2016 000 001

## Description

### FIELD OF THE DISCLOSURE

This disclosure relates generally to an improved ground engaging blade for an agricultural implement such as a tillage disc or coulter, drill or planter, and more particularly to such a blade that, due to this shape, resists throwing and provides a consistent cut.

### BACKGROUND OF THE DISCLOSURE

Coulters are presently used ahead of no-till implements-such as a planter---to fracture a narrow band of soil to prepare the soil to receive the no-till implement. U.S. Pat. No. 7,497,270 to Bruce shows coulters and one way of how they are used to till and open the soil.

A disc can be a flat coulter that is deformed to a convex shape on one side and concave shape on the other side so it will throw soil in one direction as it moves forwardly through the ground. Discs are most often used with a plurality of them side by side in "gangs" or rows as shown in U.S. Pat. No. 6,554,079 to Bruce.

Further, U.S. Pat. No. 8,100,194 to Bruce details that because of differences in soil types and differences among crops grown, there is a need for coulters and discs that can be easily adjusted in shape at the time of manufacture to conform to the conditions anticipated in the field. One such condition is difficult soil types with excess rocks and residue which results in an inconsistent cut made by the coulter or a soil type or crop type in which throwing is disfavored. As such, there is a need in the art for a coulter which provides a consistent cut and reduces throwing.

US 2015/289433 A1 discloses a wavy disc blade including a first side, a second side, a central portion having at least one opening, and a wavy portion adjacent to, extending radially from and circumferentially about the central portion. The wavy portion includes a plurality of waves extending from the central portion to an edge portion, the waves forming a plurality of crests and valleys between the central portion and the edge portion. The wavy disc blade also includes a plurality of teeth formed along the edge portion. At least one of a first beveled portion may be formed on the first side at and along the edge portion and a second beveled portion may be formed on the second side at and along the edge portion.

US 2021/103642 A1 discloses a disc for an agricultural implement comprising an annular, outside a predetermined centre diameter defined, soil-cultivating portion, a central, inside a predetermined centre diameter defined, dish-shaped portion, with a boss-receiving, inner side and between these portions an existing, annular connection portion with fastening screw holes. The connection portion is a truncated conical portion, the inner mantle surface of which is mainly straight or double-bowed with the convex side facing said inner side and a line through the opening plane in the hole opening of each fastening screw hole on said inner side forms an angle α with a plane that is perpendicular to the centre line of the disc, wherein the angle α is 5°-10°.

US 2 749 649 A discloses a reversible disc harrow for detachable attachment to a tractor and comprising the combination of an implement frame, means for detachably connecting said implement frame to the tractor, a pair of disc gangs adapted to be reversed between an outthrow and an inthrow position, hinge means disposed between said implement frame and each said gang providing bodily tilt of the latter about a generally horizontal axis spaced below said implement frame and also providing swivel movement of each said gang from an outthrow to an inthrow position about a generally upright axis offset rearwardly from the rotational axis of the individual discs in said gang, a first positive locking means for maintaining each said gang in a selected condition of tilt with said gang in its outthrow as well as its inthrow position, and a second positive locking means for maintaining each said gang in a selected condition of angling adjustment with said gang in outthrow as well as in inthrow position, said second positive locking means including a pair of reversible angling connections.

US 2016/00001 A1 discloses an agricultural tillage blade having a central opening is adapted to be disposed on a shaft for rotation to cut trash and penetrate into the soil. The blade has an outer periphery substantially in the shape of a sine curve formed about a circle. The outer periphery of the blade is sharpened to more easily penetrate the soil and cut trash.

CN 109 451 885 A discloses an independent plough coulter arm assembly, which comprises a notch harrow blade, a plough coulter arm, a hub unit, V-shaped plates and a rubber suspension; the hub unit is arranged at the central hole of the notch harrow blade; one end of the plough coulter arm is fixedly connected with a shaft of the hub unit, and the other end of the plow coulter arm is provided with a V-shaped opening; the two V-shaped plates are connected into a whole in the opposite direction of the V-shaped opening, one of the V-shaped plates is embedded and welded on the V-shaped opening of theplough coulter arm, a machine square pipe penetrates through the space between the two V-shaped plates, and the rubber is suspended is filled in the gap between the machine square pipe and the two V-shaped plates. According to the structure design, each coulter head works independently, and the depth of cultivated land is adjusted through the buffering action when the coulter head cultivates on the ground with different heights, so that the maintenance in the use process is achieved, and the time is effectively saved; the independent plough coulter arm has higher strength and impact resistance, can provide a perfect working state even under the worst environment, and improves the tillage effect and efficiency.

### BRIEF SUMMARY OF THE DISCLOSURE

A ground engaging agricultural tillage blade according to the subject-matter of claim 1 is provided. Further embodiments are disclosed according to the subject-matter of the dependent claims. The disclosure also relates to an apparatus for an agricultural implement blade. The blade is a disc or coulter that is generally circular with an outer periphery. A plurality of step plane notches are disposed in the outer periphery of the disc, each of the plurality of step plane notches tapering from a predetermined thickness on a radial inside to a thinner generally sharped edge at the radially outermost part thereof. In one embodiment of the disclosure, each step plane notch has a uniformly deep and sharpened edge so as to provide consistent penetration and residue sizing of the ground with a reduced amount of soil throwing. The disc can be generally curved, a flat coulter, or a disc that is convex on one side and concave on the other side.

In a first aspect, according to the subject-matter of claim 1, the present disclosure provides a ground engaging agricultural tillage blade comprising: a disc having a central opening adapted to be attached to an implement for rotation about an axis of rotation; the disc having an outer periphery; and characterized by further comprising: a plurality of step plane notches in the disc from a location substantially at the outer periphery to the central opening; wherein each of the plurality of step plane notches comprises a depth and a width, wherein the depth is 50% or less than the width, and wherein the step plane notches are of uniform depth.

In a second aspect, the present disclosure provides a ground engaging agricultural tillage blade apparatus characterized by comprising: a ground engaging agricultural tillage blade according to the first aspect; and a hub being attached to the disc around the central opening.

In a third aspect, the present disclosure provides a ground engaging agricultural tillage blade apparatus characterized by comprising: at least two ground engaging agricultural tillage blades according to the first aspect; and wherein a spacer spool is disposed on a shaft between the discs of the at least two ground engaging agricultural tillage blades, the spacer spool extending radially outwardly from the center opening of each disc.

### BRIEF DESCRIPTION OF THE DRAWINGS

The above needs are at least partially met through provision of the apparatus described in the following detailed description, particularly when studied in conjunction with the drawings, wherein:
FIG. 1 is a perspective view of the convex side of the concave/convex disc made in accordance with the disclosure;
FIG. 2 is a perspective view of the concave side of the disc of FIG. 1;
FIG. 3 is a plan view of the convex side of the disc of FIGS. 1 and 2;
FIG. 4 is a side elevational view of the disc of FIGS. 1-3, but with a hub attached to a bent axle;
FIG. 5 is an enlarged side elevational view of the hub of FIG. 6 from the left side of FIG. 4;
FIG. 6 is an exploded, partial perspective view of the disc and hub shown in FIG. 4;
FIG. 7 is a side elevational view of two of the discs of FIGS. 1-3 shown with a spacer spool between adjacent discs;
FIG. 8 is a schematic view of part of a gang of discs with spacer spools between adjacent discs showing the direction that the discs throw dirt when pulled through an agricultural field;
FIG. 9 is a coulter version of the present disclosure;
FIG. 10 is a side elevational view of the coulter of FIG. 9 with a hub of the type shown in FIGS. 4-6 attached thereto;
FIG. 11 shows a gang of coulters of the type shown in FIG. 9 disposed on a shaft with spacer spools disposed between adjacent coulters;
FIG. 12 is a cross sectional view taken along line **13-13** of FIG. 3; and
FIG. 13 is a cross sectional view taken along line **15-15** of FIG. 9.

Elements in the figures are illustrated for simplicity and clarity and have not necessarily been drawn to scale. For example, the dimensions and/or relative positioning of some of the elements in the figures may be exaggerated relative to other elements to help to improve understanding of various embodiments of the present disclosure. Also, common but well-understood elements that are useful or necessary in a commercially feasible embodiment are often not depicted in order to facilitate a less obstructed view of these various embodiments of the present disclosure. Certain actions and/or steps may be described or depicted in a particular order of occurrence while those skilled in the art will understand that such specificity with respect to sequence is not actually required. The terms and expressions used herein have the ordinary technical meaning as is accorded to such terms and expressions by persons skilled in the technical field as set forth above except where different specific meanings have otherwise been set forth herein.

### DETAILED DESCRIPTION

In the following detailed description of the embodiments, reference is made to the accompanying drawings which form a part hereof, and in which is shown by way of illustration specific preferred embodiments in which the disclosure may be practiced. These embodiments are described in sufficient detail to enable those skilled in the art to practice the disclosure, and it is to be understood that other embodiments may be utilized and that mechanical, procedural, and other changes may be made without departing from the scope of the appended claims. The following detailed description is, therefore, not to be taken in a limiting sense, and the scope of the present disclosure is defined only by the appended claims.

As used herein, the terminology such as vertical, horizontal, top, bottom, front, back, end and sides are referenced according to the views presented. It should be understood, however, that the terms are used only for purposes of description, and are not intended to be used as limitations. Accordingly, orientation of an object or a combination of objects may change without departing from the scope of the appended claims

### Agricultural Blade

As stated above, the agricultural blade apparatus comprises an agricultural blade **10.** Each blade **10** may be of any diameter and thickness and may be constructed out of any suitable material. In preferred embodiment, the blade **10** is of a diameter that is preferably 43.18 cm to 101.6 cm (17 inches to 40 inches). In a still further preferred embodiment, the blade **10** is preferably 4.572 mm to 12.7 mm (0.180 inches to 0.5 inches) in thickness. However, the agricultural blade may be of any diameter and thickness without departing from the scope of the appended claims. In a still further embodiment, the blade **10** is constructed out of any suitable material, including, but not limited to, metal, steel, hard plastics, and the like. Each blade **10** further comprises an outer periphery **18.**

### Disc

As stated above, the agricultural blade apparatus comprises an agricultural blade **10.** In an embodiment of the agricultural blade apparatus, the agricultural blade **10** is a disc **12,** which may be convex on one side and concave on the other side. Each disc **12** may be of any diameter and thickness and may be constructed out of any suitable material. In preferred embodiment, the disc **12** is of a diameter that is preferably 43.18 cm to 101.6 cm (17 inches to 40 inches). In a still further preferred embodiment, the disc **12** is preferably 4.572 mm to 12.7 mm (0.180 inches to 0.5 inches) in thickness. However, the disc may be of any diameter and thickness without departing from the scope of the appended claims. In a still further embodiment, the disc **12** is constructed out of any suitable material, including, but not limited to, metal, steel, hard plastics, and the like. Each disc **12** further comprises an outer periphery **18.**

### Coulter

As stated above, the agricultural blade apparatus comprises an agricultural blade 10. In an embodiment of the agricultural blade apparatus, the agricultural blade 10 is a coulter **14,** which is substantially flat. Each coulter **14** may be of any diameter and thickness and may be constructed out of any suitable material. In a preferred embodiment, the coulter **14** is of a diameter that is preferably 43.18 cm to 101.6 cm (17 inches to 40 inches). In a still further preferred embodiment, the coulter **14** is preferably 3.175 mm to 12.7 mm (0.125 inches to 0.5 inches) in thickness. In a still further embodiment, the coulter **14** is constructed out of any suitable material, including, but not limited to, metal, steel, hard plastics, and the like. Each coulter **14** further comprises an outer periphery **18.**

### Step Plane Notch

As stated above, the agricultural blade apparatus comprises an agricultural blade **10.** In an embodiment of the agricultural blade apparatus, the agricultural blade **10** further comprises a step plane notch **16,** and preferably a plurality of step plane notches **16** disposed in the outer periphery **18** of the agricultural blade **10.** In a preferred embodiment, the agricultural blade comprises at least five step plane notches **16.** The angle of opening of each notch **16** disposed in the outer periphery **18** is preferably 80 degrees to 135 degrees, or any angle which is suitable for reduction of throwing and promotion of consistent cuts. It is to be understood that the notches **16** can be of other shapes and sizes. It is preferable that each notch **16** be the same shape to promote uniform wear. Further, it is preferable that the plurality of notches **16** are equally spaced in the outer periphery **18.** In a preferred embodiment, spacing should be provided such that each third of the agricultural blade **10** contains at least one notch, preferably at least one and half notches, and preferably at least two notches.

Additionally, as stated above, the agricultural blade apparatus comprises an agricultural blade **10** wherein the agricultural blade **10** comprises a step plane notch **16,** and preferably a plurality of step plane notches **16** disposed in the outer periphery **18** of the agricultural blade **10.** In one arrangement, as one example, the agricultural blade **10** comprises a plurality of step plane notches **16** wherein every other step plane notch **16 is** sharpened on the opposite side. In another arrangement, the agricultural blade **10** comprises a plurality of step plane notches **16** wherein every step plane notch **16** is sharpened on both sides. In yet another arrangement, the agricultural blade **10** comprises a plurality of step plane notches **16** wherein every step plane notch **16** is sharpened on the same side. Any variation of sharpening the step plane notches **16** including, but not limited to, every step plane notch **16** being sharpened alike or each step plane notch **16** being sharpened in its own unique manner (i.e., being sharpened on one side, being sharpened on both sides, etc.) may be utilized by the agricultural blade apparatus without departing from the scope of the appended claims. Furthermore, the step plane notches 16 remain sharp longer than other blades.

Furthermore, the agricultural blade **10** comprises a plurality of step plane notches **16** which may be uniform in depth **40** and sharpness so that any forces applied to the outer periphery **18** will be transmitted evenly so as to avoid inconsistency in the cut made by the blade **10,** whether it is a disc or a coulter. In another embodiment, the agricultural blade **10** comprises a plurality of step plane notches **16** that may vary in depth **40** and sharpness. In one embodiment, the agricultural blade **10** comprises a plurality of step plane notches **16** wherein each step plane notch **16** comprises a depth **40** which is 50% or less of the width 42 of the notch **16.** In one embodiment, as one example, the agricultural blade **10** comprises a plurality of step plane notches **16** of varying depths, but each step plane notch **16** comprises a depth **40** which is 50% or less of the width **42** of the respective notch **16.**

### Central Opening, Shaft, and Axle

Each of the agricultural blades **10** is provided with a central opening **20** which receives the shaft **32.** In an alternative embodiment, each of the agricultural blades **10** is provided with a central opening **20** which receives the axle **22.** The central opening **20** may be of any suitable size, shape, and design, so as to accommodate receipt of the shaft **32.** Similarly, the shaft **32** and axle **22** may be of any suitable size, shape, and design.

### Hub

Each of the agricultural blades **10** is provided with a hub **24** which facilitates receipt of the shaft **32** or axle **22.** The hub may be of any suitable size, shape, and design.

### Spacer Spools

Spacer spool **34** is formed of any suitable size, shape, and design, and is configured to be positioned between adjacent agricultural blades **10** to facilitate proper spacing of the cuts made by the agricultural implement in the soil. Each of the spacer spools **34** comprises a center section and opposite end portions. A shaft opening extends through each of the spacer spools **34.** The end portion can be provided with an annular rim or peripheral portion which is slightly convex so as to be complimentary to the inside curvature of the adjacent disc blade **12** or substantially flat so as to be complimentary to the adjacent coulter blade **14.** The opposite end portion is also provided with an annular rim or peripheral portion which is slightly concave so as to be complimentary to the outside curvature of the adjacent disc blade **12** or substantially flat so as to be complimentary to the adjacent coulter blade **14.** In an alternative embodiment, one end portion may be slightly smaller in diameter than the opposite end portion since it has been found through experience that the agricultural blades **10** suffer less breakage if spools of different diameters are positioned on opposite sides thereof.

### Threaded Fastener

Threaded fastener **26** is formed of any suitable size, shape, and design, and is configured to tighten against the surface of the hub **24** while also pulling the agricultural blade **10** into firm engagement with the hub **24.** The use of a threaded fastener **26** ensures that a seal is formed with the hub **24** and the agricultural blade **10.**

In the arrangement shown, as one example, the threaded fastener **26** is a generally cylindrical elongated member having a first threaded end and a head. First threaded end and head are in coaxial alignment with one another. That is, the center axis of rotation of the first threaded end and head are in alignment with one another, despite the fact that the diameters or shapes or features of the first threaded end and the head may differ. First threaded end and head may have the same diameter or different diameters.

Also shown in this example is a head positioned in the end of the threaded fastener **26.** Head is any feature or device that allows for the threaded fastener **26** to be grasped and rotation to be imparted on the threaded fastener **26.** In the arrangement shown, as one example, head is generally cylindrical in shape and has a diameter slightly larger than the diameter of the first threaded end. This head includes a plurality of flat surfaces on opposing sides of the head. These flat surfaces allow for a wrench or other tool to grasp the head and impart torque there on. This can be useful during the installation process. It is hereby contemplated for use that head can take on any other form, such as a hex-head member, a square head member, a recessed hexagonal socket, a recessed square socket, a recessed flat head feature that receives a flat head screw driver, a recessed Philips head feature that receives a Phillips head screw driver, a slot, a pair of crossed slots, or any other feature that can be used to impart rotation. In this arrangement, when the first threaded end is inserted within the hub **24,** the head extend outward from the hub **24** thereby facilitating easy access to the head. In this arrangement, once the first threaded end is inserted into the hub **24,** a tool grasps the head thereby imparting rotation on threaded fastener **26** or preventing rotation of the threaded fastener **26.**

### Nut

Also shown in this example is a nut **30** positioned in the end of the threaded fastener 26 opposite the head and in coaxial alignment with the head. The nut **30** is any feature or device that allows for the threaded fastener **26** to be grasped and rotation to be imparted on the threaded fastener **26** and remain in firm engagement with the hub **24** and agricultural blade **10.** In the arrangement shown, as one example, the nut **30** is generally cylindrical in shape and has a diameter slightly larger than the diameter of the first threaded end. The nut **30** includes a plurality of flat surfaces on opposing sides of the nut **30.** These flat surfaces allow for a wrench or other tool to grasp the nut **30** and impart torque there on. This can be useful during the installation process. It is hereby contemplated for use that nut **30** can take on any other form, such as a hex-head member, a square head member, or any other feature that can be used to impart rotation. In this arrangement, when the first threaded end is inserted within the hub **24** and the nut **30,** wherein the nut extend outward from the agricultural blade **10** thereby facilitating easy access to the nut **30.** In this arrangement, once the first threaded end is inserted into the nut **30,** a tool grasps the nut **30** thereby imparting rotation on nut **30** or preventing rotation of the threaded fastener **26.**

### In Operation

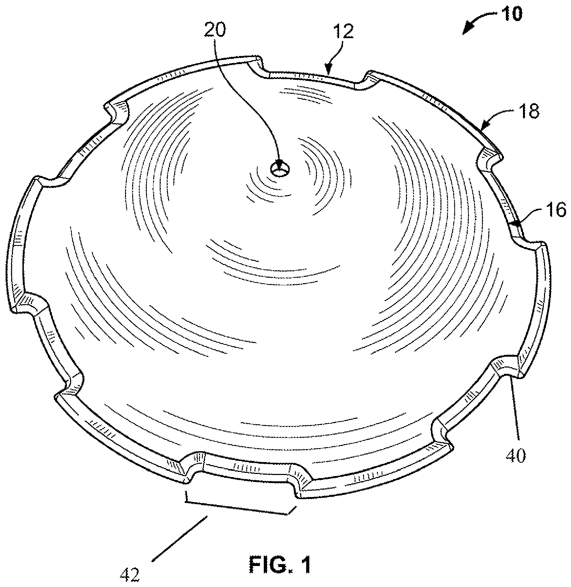

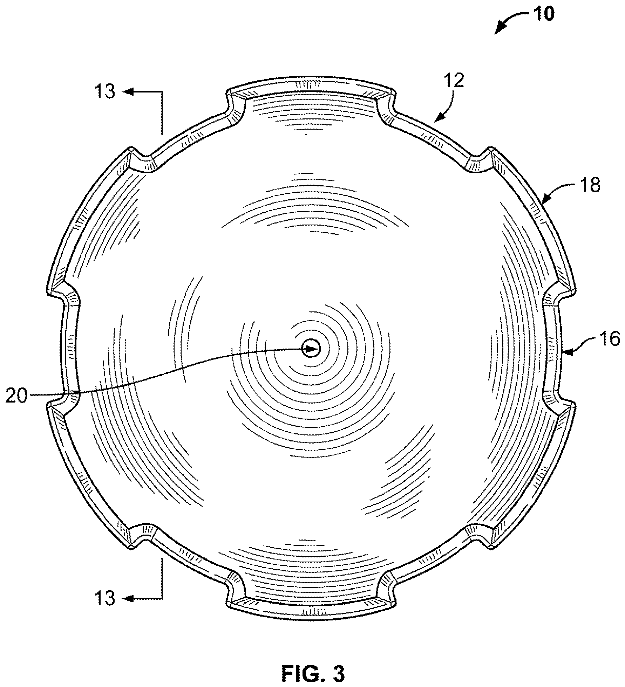

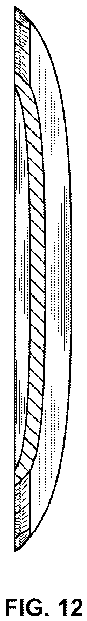

Referring now to FIGS. 1-3 and 12, an agricultural blade **10** has a plurality of step plane notches **16** disposed in the outer periphery **18** of the disc **12** or coulter **14.** The cross section shown in FIG. 12 shows a cross section of the disc **12** and step plane notches **16.**

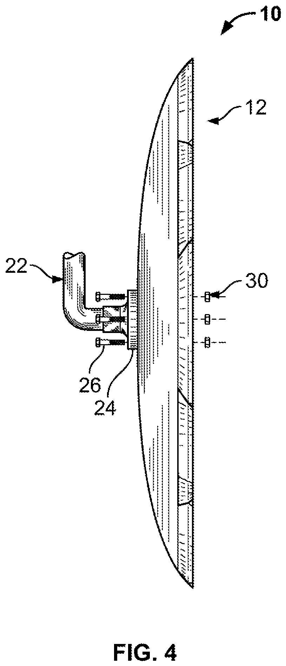

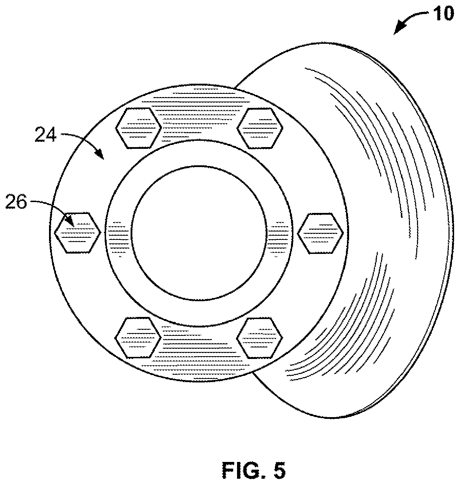

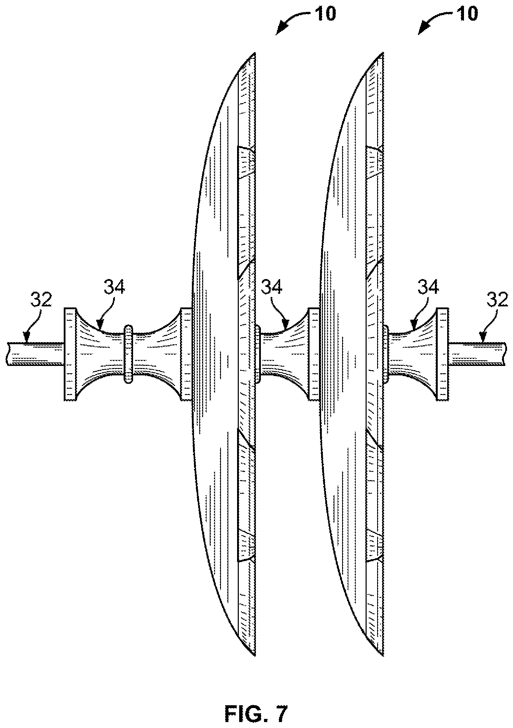

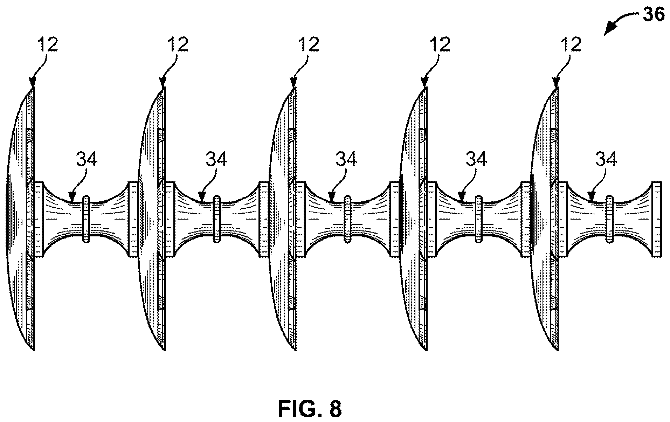

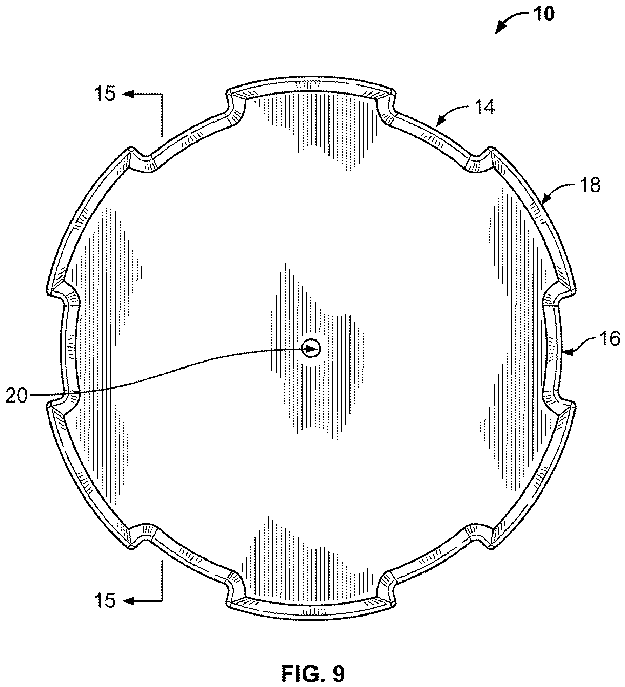

An important distinction between the agricultural blade **10** and prior art agricultural blades is that the step plane notches **16** are uniform in depth and sharpness so that any forces applied to the outer periphery **18,** will be transmitted evenly so as to avoid inconsistency in the cut made by the blade, whether it is a disc or a coulter. In a preferred embodiment, the disc **12** or coulter **14** is connected to a mounting apparatus such as hub **24** (FIGS. 4-6) on bent axle **22** or a spacer spool **34** (FIGS. 7 and 8) that separate and hold in place the discs **12** along a shaft **32** which provides rotation about an axis of rotation. In an embodiment, the axis of rotation is substantially horizontal. The disc gang **36** shown in FIG. 9 or the coulter gang **38** shown in FIG. 12 could have a non-circular center opening with a complementary shaped shaft in the non-circular center opening so that the shaft and discs or coulters all rotate together as a unit. In an embodiment of the disclosure, a spacer spool **34** is disposed on a shaft **32** between two of the discs **12** or between two of the coulters **14** and the spacer spool **34** extends radially outwardly by a distance.

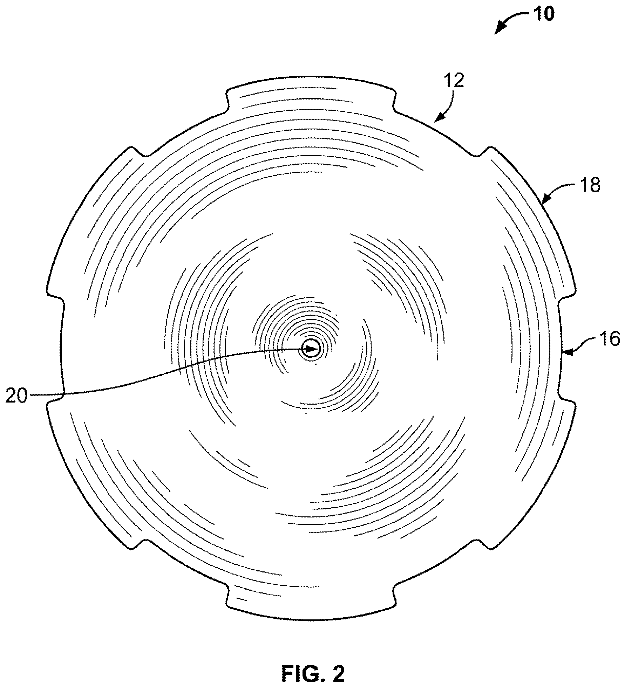

Additionally, as described above, FIG. 1 is a perspective view of a concave/convex disc made in accordance with the disclosure. However, in another embodiment, the side shown of the disc in FIG. 1 may be concave without departing from the disclosure. Furthermore, as described above, FIG. 2 is a perspective view of a concave/convex disc. However, in another embodiment, the side shown of the disc in FIG. 2 may be convex without departing from the scope of the appended claims.

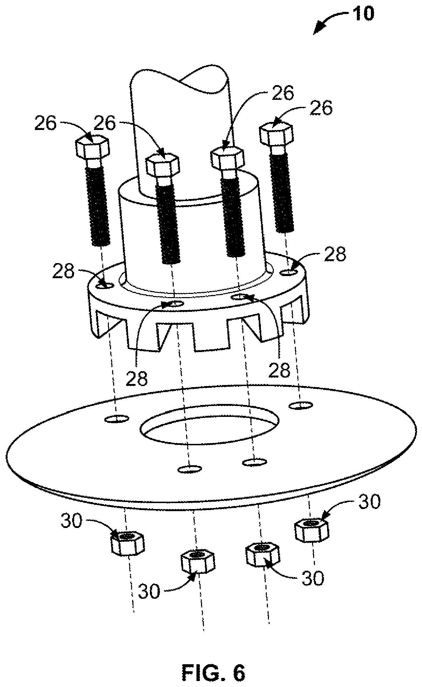

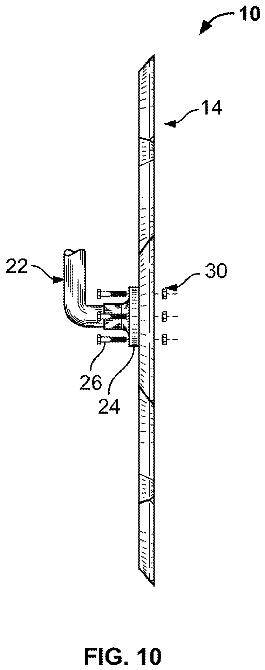

FIG. 6 shows that the hub **24** is preferably attached to the disc **12** around a central opening **20** by placing threaded fasteners **26,** such as bolts, through substantially aligned holes **28** in the hub **24,** through substantially aligned holes **28** extending through the disc **12** or coulter **14** to make sure that the hub **24** is securely fastened to the disc **12.** Nuts **30** are threadably attached to the ends of the threaded fasteners **26** to hold the hub **24** to the disc **12.** FIGS. 4-6 show that the hub **24** conforms to the surface of the disc **12.** The hub **24** shown in FIG. 10 is preferably of the same configuration as that shown in FIGS. 4-6. In an embodiment, the central opening is adapted to be attached to an agricultural implement, such as a disc harrow, disc seeder, or planter.

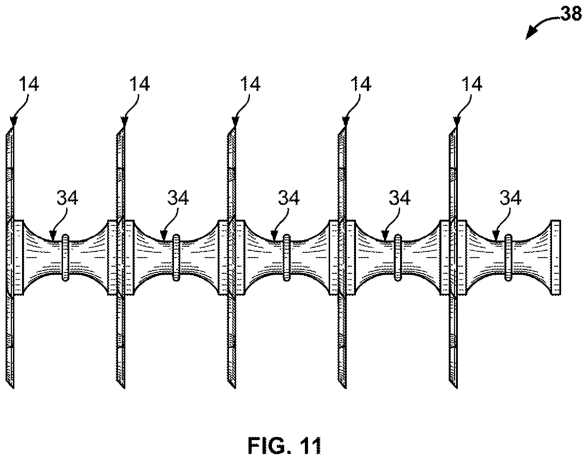

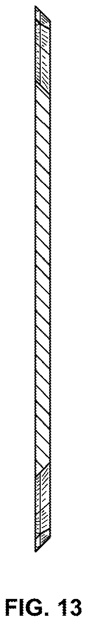

A second embodiment of the disclosure, shown by example only, is a coulter **14** shown in FIGS. 9-11 and 13. The only difference between the coulter **14** of FIGS. 9-11 and 13 and the disc **12** of FIGS. 1-3 is that the coulter **14** is primarily flat, whereas the disc **12** may be convex on one side and concave on the other side.

Those skilled in the art will recognize that a wide variety of modifications, alterations, and combinations can be made with respect to the above described embodiments without departing from the scope of the appended claims, and that such modifications, alterations, and combinations are to be viewed as being within the ambit of the inventive concept as expressed by the attached claims.

## Claims

1. A ground engaging agricultural tillage blade (10, 14) comprising:
a disc (12) having a central opening (20) adapted to be attached to an implement for rotation about an axis of rotation;
the disc having an outer periphery (18); and
**characterized by** further comprising:
a plurality of step plane notches (16) in the disc from a location substantially at the outer periphery to the central opening;
wherein each of the plurality of step plane notches comprises a depth (40) and a width (42),
wherein the depth is 50% or less than the width, and
wherein the step plane notches are of uniform depth.

2. The agricultural tillage blade of claim 1, wherein the disc is convex on one side and concave on the other.

3. The agricultural tillage blade of claim 1, wherein the disc is substantially flat.

4. The agricultural tillage blade of claims 1-3, wherein a hub (24) is attached to the disc around the central opening.

5. The agricultural tillage blade of claims 1-4, wherein substantially aligned holes (28) are disposed through the blade and through the hub and threaded fasteners (26) extend through the aligned holes for holding the hub fixed to the blade.

6. The agricultural tillage blade of claims 1-5, wherein a spacer spool (34) is disposed on a shaft (32) between two of the discs and the spacer spool extends radially outwardly by a distance.

7. A ground engaging agricultural tillage blade apparatus **characterized by** comprising:
a ground engaging agricultural tillage blade according to any one of claims 1 to 3; and
a hub (24) being attached to the disc around the central opening.

8. The agricultural tillage blade apparatus of claim 7, wherein substantially aligned holes (28) are disposed through the blade and through the hub and threaded fasteners (26) extend through the aligned holes for holding the hub fixed to the blade.

9. The agricultural tillage blade apparatus of claims 7-8, further comprising at least two discs.

10. The agricultural tillage blade apparatus of claims 7-9, wherein a spacer spool (34) is disposed on a shaft (32) between two of the discs and the spacer spool extends radially outwardly by a distance.

11. A ground engaging agricultural tillage blade apparatus **characterized by** comprising:
at least two ground engaging agricultural tillage blades according to any one of claims 1 to 3; and
wherein a spacer spool (34) is disposed on a shaft (32) between the discs of the at least two ground engaging agricultural tillage blades, the spacer spool extending radially outwardly from the center opening of each disc.

12. The agricultural tillage blade apparatus of claims 11, wherein a hub (24) is attached to each disc around a central opening.

13. The agricultural tillage blade apparatus of claim 12, wherein substantially aligned holes (28) are disposed through each disc and through the hub and threaded fasteners (26) extend through the aligned holes for holding the hub fixed to each disc.

## Patentansprüche

1. In den Boden eingreifende landwirtschaftliche Bodenbearbeitungsschar (10, 14) umfassend:
eine Scheibe (12) mit einer mittigen Öffnung (20), die zur Befestigung an einem Gerät zur Drehung um eine Drehachse angepasst ist;
wobei die Scheibe einen Außenumfang (18) aufweist; und
**dadurch gekennzeichnet, dass** sie ferner umfasst:
eine Vielzahl von Kerben (16) auf Stufenebene in der Scheibe von einer Stelle im Wesentlichen am Außenumfang hin zu der mittigen Öffnung;
wobei jede der Vielzahl von Kerben auf Stufenebene eine Tiefe (40) und eine Breite (42) umfasst,
wobei die Tiefe 50 % oder weniger als die Breite beträgt, und
wobei die Kerben auf Stufenebene eine gleichmäßige Tiefe aufweisen.

2. Landwirtschaftliche Bodenbearbeitungsschar nach Anspruch 1, wobei die Scheibe auf der einen Seite konvex und auf der anderen konkav ist.

3. Landwirtschaftliche Bodenbearbeitungsschar nach Anspruch 1, wobei die Scheibe im Wesentlichen flach ist.

4. Landwirtschaftliche Bodenbearbeitungsschar nach den Ansprüchen 1 bis 3, wobei eine Nabe (24) um die mittige Öffnung herum an der Scheibe befestigt ist.

5. Landwirtschaftliche Bodenbearbeitungsschar nach den Ansprüchen 1 bis 4, wobei im Wesentlichen ausgerichtete Löcher (28) durch die Schar und durch die Nabe verlaufen und Gewindebefestigungen (26) sich durch die ausgerichteten Löcher erstrecken, um die Nabe an der Schar befestigt zu halten.

6. Landwirtschaftliche Bodenbearbeitungsschar nach den Ansprüchen 1 bis 5, wobei eine Abstandshalterspule (34) auf einer Welle (32) zwischen zwei der Scheiben angeordnet ist und die Abstandshalterspule sich um einen Abstand radial nach außen erstreckt.

7. In den Boden eingreifende landwirtschaftliche Bodenbearbeitungsschareinrichtung, **dadurch gekennzeichnet, dass** sie umfasst:
eine in den Boden eingreifende landwirtschaftliche Bodenbearbeitungsschar nach einem der Ansprüche 1 bis 3; und eine Nabe (24), die um die mittige Öffnung herum an der Scheibe angebracht ist.

8. Landwirtschaftliche Bodenbearbeitungsschareinrichtung nach Anspruch 7, wobei im Wesentlichen ausgerichtete Löcher (28) durch die Schar und durch die Nabe angeordnet sind und Gewindebefestigungen (26) sich durch die ausgerichteten Löcher erstrecken, um die Nabe an der Schar befestigt zu halten.

9. Landwirtschaftliche Bodenbearbeitungsschareinrichtung nach den Ansprüchen 7 bis 8, die ferner mindestens zwei Scheiben umfasst.

10. Landwirtschaftliche Bodenbearbeitungsschareinrichtung nach den Ansprüchen 7 bis 9, wobei eine Abstandshalterspule (34) auf einer Welle (32) zwischen zwei der Scheiben angeordnet ist und die Abstandshalterspule sich um einen Abstand radial nach außen erstreckt.

11. In den Boden eingreifende landwirtschaftliche Bodenbearbeitungsschareinrichtung, **dadurch gekennzeichnet, dass** sie umfasst:
mindestens zwei in den Boden eingreifende landwirtschaftliche Bodenbearbeitungsscharen nach einem der Ansprüche 1 bis 3; und
wobei eine Abstandshalterspule (34) auf einer Welle (32) zwischen den Scheiben der mindestens zwei in den Boden eingreifenden landwirtschaftlichen Bodenbearbeitungsscharen angeordnet ist, wobei die Abstandshalterspule sich von der mittigen Öffnung jeder Scheibe radial nach außen erstreckt.

12. Landwirtschaftliche Bodenbearbeitungsschareinrichtung nach den Ansprüchen 11, wobei eine Nabe (24) um die mittige Öffnung herum an der Scheibe angebracht ist.

13. Landwirtschaftliche Bodenbearbeitungsschareinrichtung nach Anspruch 12, wobei im Wesentlichen ausgerichtete Löcher (28) durch jede Schreibe und durch die Nabe angeordnet sind und Gewindebefestigungen (26) sich durch die ausgerichteten Löcher erstrecken, um die Nabe an der Schar befestigt zu halten.

## Revendications

1. Lame de labour agricole (10, 14) entrant en prise avec le sol, comprenant :
un disque (12) ayant une ouverture centrale (20) adapté pour être fixé à un outil pour une rotation autour d'un axe de rotation ;
le disque ayant une périphérie externe (18) ; et
**caractérisée en ce qu'elle** comprend en outre :
une pluralité d'encoches à plan étagé (16) dans le disque à partir d'un emplacement situé sensiblement au niveau de la périphérie externe jusqu'à l'ouverture centrale ;
dans laquelle chacune de la pluralité d'encoches à plan étagé comprend une profondeur (40) et une largeur (42),
dans laquelle la profondeur est inférieure ou égale à 50 % de la largeur, et
dans laquelle les encoches à plan étagé sont d'une profondeur uniforme.

2. Lame de labour agricole selon la revendication 1, dans laquelle le disque est convexe d'un côté et concave de l'autre.

3. Lame de labour agricole selon la revendication 1, dans laquelle le disque est sensiblement plat.

4. Lame de labour agricole selon les revendications 1 à 3, dans laquelle un moyeu (24) est fixé au disque autour de l'ouverture centrale.

5. Lame de labour agricole selon les revendications 1 à 4, dans laquelle des trous sensiblement alignés (28) sont disposés à travers la lame et à travers le moyeu et des éléments de fixation filetés (26) s'étendent à travers les trous alignés pour maintenir le moyeu fixé à la lame.

6. Lame de labour agricole selon les revendications 1 à 5, dans laquelle une bobine d'espacement (34) est disposée sur un arbre (32) entre deux des disques et la bobine d'espacement s'étend radialement vers l'extérieur sur une certaine distance.

7. Appareil à lame de labour agricole entrant en prise avec le sol, **caractérisé en ce qu'il** comprend :
une lame de labour agricole entrant en prise avec le sol selon l'une quelconque des revendications 1 à 3 ; et
un moyeu (24) fixé au disque autour de l'ouverture centrale.

8. Appareil à lame de labour agricole selon la revendication 7, dans lequel des trous sensiblement alignés (28) sont disposés à travers la lame et à travers le moyeu et des éléments de fixation filetés (26) s'étendent à travers les trous alignés pour maintenir le moyeu fixé à la lame.

9. Appareil à lame de labour agricole selon les revendications 7 à 8, comprenant en outre au moins deux disques.

10. Appareil à lame de labour agricole selon les revendications 7 à 9, dans lequel une bobine d'espacement (34) est disposée sur un arbre (32) entre deux des disques et la bobine d'espacement s'étend radialement vers l'extérieur sur une certaine distance.

11. Appareil à lame de labour agricole entrant en prise avec le sol, **caractérisé en ce qu'il** comprend :
au moins deux lames de labour agricole entrant en prise avec le sol selon l'une quelconque des revendications 1 à 3 ; et
dans lequel une bobine d'espacement (34) est disposée sur un arbre (32) entre les disques des au moins deux lames de labour agricole entrant en prise avec le sol, la bobine d'espacement s'étendant radialement vers l'extérieur à partir de l'ouverture centrale de chaque disque.

12. Appareil à lames de labour agricole selon la revendication 11, dans lequel un moyeu (24) est fixé à chaque disque autour d'une ouverture centrale.

13. Appareil à lame agricole selon la revendication 12, dans lequel des trous sensiblement alignés (28) sont disposés à travers chaque disque et à travers le moyeu, et des éléments de fixation filetés (26) s'étendent à travers les trous alignés pour maintenir le moyeu fixé à chaque disque.
